Europäisches Patentamt

(19) European Patent Office

Office européen des brevets

(11) Publication number: **0 441 659 A1**

## EUROPEAN PATENT APPLICATION

(21) Application number: 91301086.4

(51) Int. Cl.⁵: **G01N 27/28**

(22) Date of filing: 11.02.91

(30) Priority: 09.02.90 US 478291

(43) Date of publication of application:
14.08.91 Bulletin 91/33

(84) Designated Contracting States:
DE FR GB IT

(71) Applicant: INTERNATIONAL CONTROL
AUTOMATION FINANCE S.A.
16 Rue des Bains
Ville de Luxembourg (LU)

(72) Inventor: Barben, Ted R. II
181 Lake Glen Drive
Carson City, Nevada 89703 (US)
Inventor: Christner, Kurt W.
235 Tahoe Drive
Carson City, Nevada 89703 (US)

(74) Representative: Pilch, Adam John Michael et
al
c/o D. Young & Co. 10 Staple Inn
London WC1V 7RD (GB)

(54) Detecting a break in an enclosure of an electrochemical sensor.

(57) A break in the enclosure (24) of an electrochemical sensor, such as a pH sensor, is detected by including in the enclosure a set of elements (12, 18) which are spaced apart from each other and which are made of metals having dissimilar electrical potential and reactive characteristics. When moisture enters through the broken enclosure (24), an electrical potential difference is created between the elements (12, 18) which can be detected by a voltmeter. One (12) of the elements is advantageously made of zinc and the other (18) is advantageously made of silver or silver chloride coated silver. The elements (12, 18) in the form of ribbons or wires within the enclosure (24) may simply be portions of the leads connected to sensor sense (10) and reference (22) electrodes of the sensor. A salt may be included in the enclosure (24) to produce an electrolyte when moisture enters the enclosure (24).

EP 0 441 659 A1

FIG.1

# DETECTING A BREAK IN AN ENCLOSURE OF AN ELECTROCHEMICAL SENSOR

This invention relates to electrochemical sensors, and in particular to detection of a break in an enclosure of an electrochemical sensor such as a pH sensor.

A wide variety of electrochemical sensors are currently available. These generally include specialised half cells which are exposed to an electrolyte, and which operate in conjunction with a reference cell electrically communicating with the electrolyte. Circuitry is provided for sensing changes in potential difference between the half cell and the reference cell to provide an indication of the electrochemical properties of the electrolyte.

It is sometimes difficult to tell when a glass pH electrode is broken because the electrical output does not necessarily change as a result of the break. The output potential of the electrode, when broken, depends on a sample or reference solution that passes in through cracks in the body of the electrode. There are times when the inability of a broken pH electrode to follow a change in pH is the only way a broken electrode could be detected.

The same problem can occur with other measuring electrodes, such as ORP and specific ion electrodes.

According to one aspect of the invention there is provided a combination of an electrochemical sensor and an apparatus for detecting a break in a normally dry, closed enclosure of the electrochemical sensor by detecting the intrusion of moisture thereinto,

the electrochemical sensor comprising a sensor sense electrode and a sensor reference electrode, and

the apparatus for detecting a break in the enclosure comprising :

first and second electrodes spaced apart from each other in the enclosure, the first and second electrodes being made of metallic elements having dissimilar electrical potential and reactive characteristics, one of the first and second electrodes being connected to the sensor sense electrode or a lead thereof, and the other of the first and second electrodes being connected to the sensor reference electrode or a lead thereof ; and

voltage measuring means connected to the first and second electrodes for detecting a potential difference between the first and second electrodes which is indicative of the intrusion of moisture into the enclosure, thereby indicating a break in the enclosure.

According to another aspect of the Invention there is provided a method of detecting a break in a normally dry, closed enclosure of an electrochemical sensor having a sensor sense electrode within the enclosure, a sensor reference electrode for electrochemical interaction with the sensor sense electrode, and lead means connected to the sensor sense electrode and to the sensor reference electrode, the method comprising the steps of :

positioning spaced apart first and second elements in the enclosure, the first and second elements being made of two metals having dissimilar electrical potential and reactive characteristics ;

connecting the first element to a portion of the lead means connected to the sensor sense electrode, and the second element to a portion of the lead means connected to the sensor reference electrode ; and

measuring a potential difference between the first and second elements which is indicative of the entry of moisture into the enclosure caused by a break in the enclosure.

According to a further aspect of the invention there is provided apparatus for detecting a break in a normally dry, closed enclosure of an electrochemical pH sensor having a sensor sense electrode and a sensor reference electrode by detecting the intrusion of moisture thereinto, the apparatus comprising :

first and second electrodes spaced apart from each other in the enclosure, the first and second electrodes being made of metallic elements having dissimilar electrical potential and reactive characteristics, one of the first and second electrodes being connected to the sensor sense electrode or a lead thereof, and the other of the first and second electrodes being connected to the sensor reference or a lead thereof ; and

voltage measuring means connected to the first and second electrodes for detecting a potential difference between the first and second electrodes when moisture enters the enclosure, indicating a break in the enclosure.

Embodiments of the invention use the properties of dissimilar metals to develop an electrical potential difference when in contact with an electrolyte. The potential difference can be detected by a pH analyser used with the sensor to provide the indication of a broken sensor. Further, a salt of the more noble of the two metals can be used to provide a more stable voltage and a sustainable current as in a battery. Further, in the instance where it is expected that the solution which would intrude into the broken electrode would not be sufficiently conductive to be an effective electrolyte, a source of dry salt can be provided within the electrode assembly to provide the needed electrolytic properties. This dry salt uses the moisture from the solution passing through the broken sensor wall to activate the electrolytic cell. The embodiments of the invention accordingly provide methods of and apparatus for detecting when an electrochemical sensor has been broken, and in particular when a pH sensor has been broken, and in general to indicate the invasion of moisture into the interior of the electrochemical sensor which is a normally dry closed chamber.

The invention will now be further described, by way of illustrative and non-limiting example, with reference to the accompanying drawings, in which like references indicate like items throughout, and in which :

Figure 1 is a schematic representation of a first embodiment of the present invention ;

Figure 2 is a view similar to Figure 1, showing a second embodiment of the invention ;

Figure 3 is a view similar to Figure 1, showing a third embodiment of the invention ;

Figure 4 is a schematic equivalent circuit of a typical pH sensor ;

Figure 5 is a view similar to Figure 4, showing an equivalent circuit of a sensor in accordance with one embodiment of the invention ; and

Figure 6 is a view similar to Figure 5, showing an equivalent circuit of another embodiment of the invention.

A description will now be given, with reference to the drawings, of embodiments of the invention providing methods of and apparatus for detecting when a pH or other electrochemical sensor has broken, and in particular when moisture has invaded the interior of the sensor.

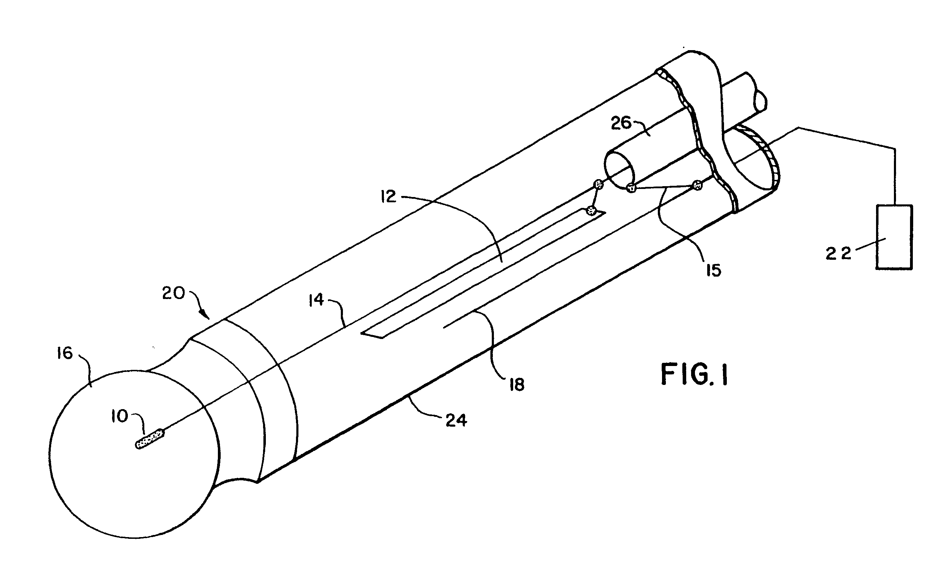

In Figure 1, the simplest of the embodiments, a sensor includes a piece of zinc ribbon or wire 12 that is attched electrically to a conductor 14 extending from a half cell 10 located within a glass bulb 16 of a glass electrode 20. The zinc piece 12 should be located close to a silver wire 18 connected electrically by a conductor 15 to a coaxial cable 26 which, in turn, is connected to a reference cell shown schematically at 22. This is the second of an electrode pair and is contained in a chamber (not shown) which contacts a pole solution through an orifice commonly referred to as a "liquid junction". The attachments of the zinc and the silver could be reversed in some electrodes and still be effective indicators of a break in a body 24 of the sensor. The half cell 10 is made of silver/silver chloride.

If either of the conductors 14 or 15 within the body 24 of the sensor is constructed of zinc or some other reactive metal or silver or some other noble metal, it would be redundant to add an additional piece of metal unless needed to place one of the metal pieces in close proximity to the other.

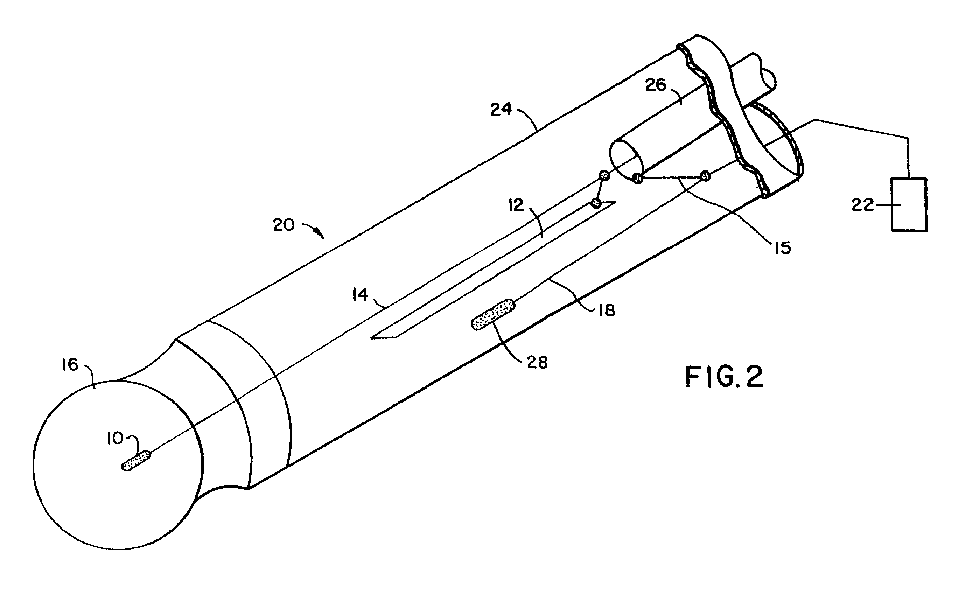

Figure 2 shows an embodiment including a coating 28 of silver chloride on the silver wire 18 in electrical contact with the reference electrode of the reference cell 22. The coating 28 provides a more predictable and stable potential. The embodiment of Figure 2 is otherwise constructed in like manner to that of Figure 1 and the same references are used to designate parts which are the same as or similar to parts as used in Figure 1.

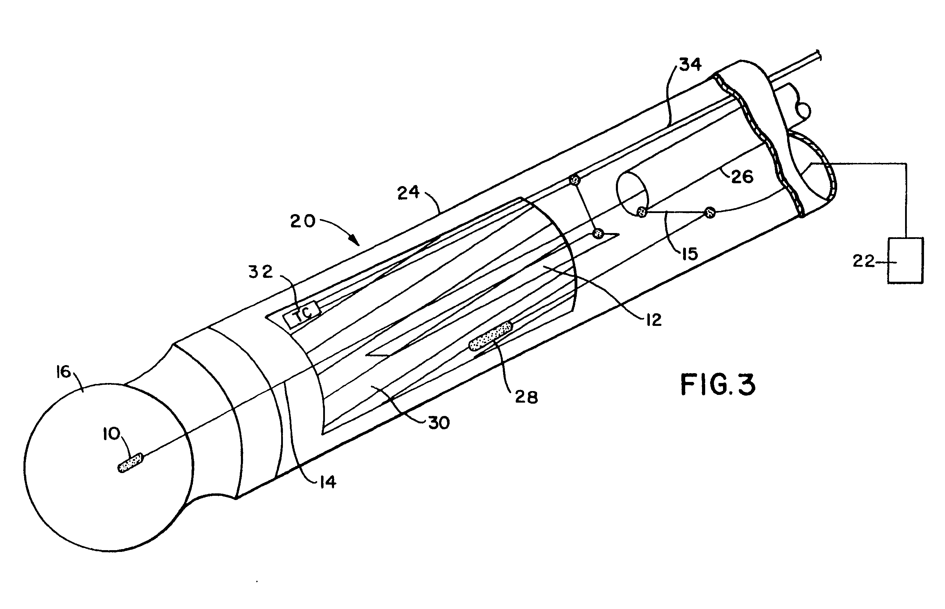

Figure 3 shows the addition of a piece of salt impregnated paper 30 within the body 24 of the electrode 20 to add conductivity to moisture intruding within the electrode body 24. An additional element 32 within the body 24 of the electrode is also shown to illustrate an alternative method of connecting the electrochemical couple. The additional element 32 is a temperature sensing element which is commonly included within the body of a sensor. The zinc piece 12 is attached to one lead 34 of the temperature sensor 32 in this example.

Any two conductors having a difference in reactivity can be used to detect the intrusion of solution into the sensor. The value of electrical potential generated will be determined by the choice of materials.

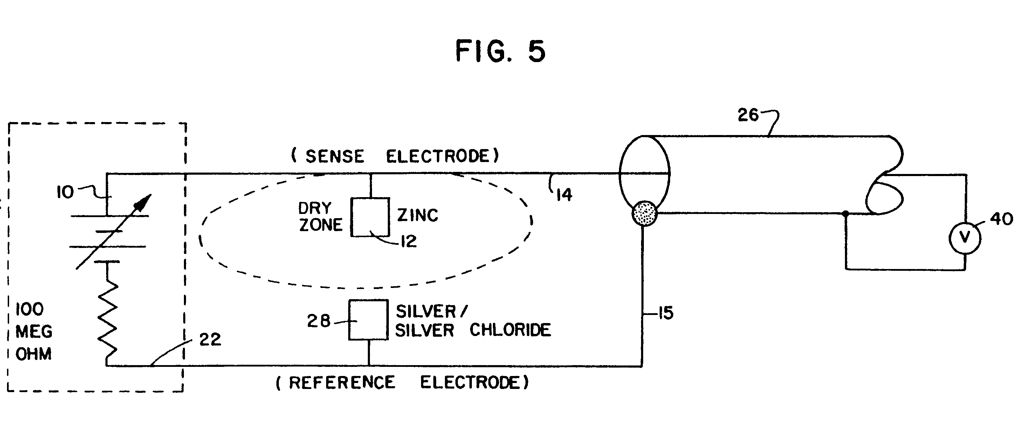

The invention can also be applied to the detection of water intrusion in any closed chamber where a dry environment is desired. It could be used, for instance, in instruments lowered into lakes or oceans for making measurements under the surface. Sensors which are sealed against the pressure of boiler water, steam or pressurised process streams can also be validated with embodiments of the invention. The connection of the electrochemical couple would be made to two additional wires which are not connected in any way to the sensor's circuitry. These wires are connected to an additional instrument such as a voltmeter shown at 40 in Figure 5. The voltmeter 40 is dedicated to detecting the potential of a single electrochemical pair or multiplexed to a multiplicity of pairs. The voltmeter 40 could also have a variety of outputs to make the state of the electrochemical pairs known to data gathering and display equipment.

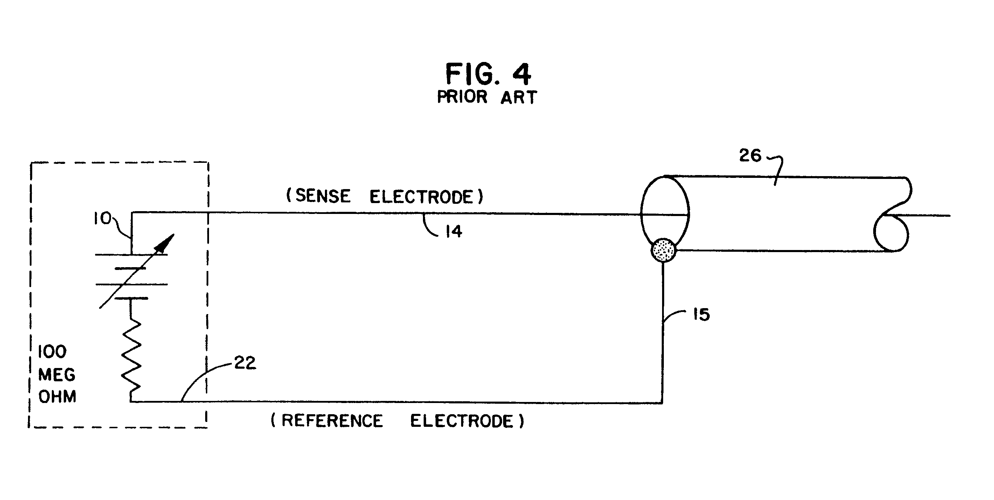

Another way of illustrating the embodiments of the invention is through the use of equivalent circuits of the pH sensor using a glass electrode as presently supplied to the industry and as proposed using embodiments of this invention. Figure 4 is an abbreviated equivalent circuit of a typical pH sensor. Figure 5 shows the pH sensor of Figure 4 with the addition of a broken sensor detection technique embodying the invention.

In Figure 5, as long as the zinc piece or element 12 remains dry, there exists an open circuit between the more active metal, in the form of a silver/silver chloride electrode 28, and the other metal of the sensor. Moisture activates the "battery" of this composite metal structure and overcomes the potential of the sensor which is shown by the interaction 10, 22 in Figures 4 and 5.

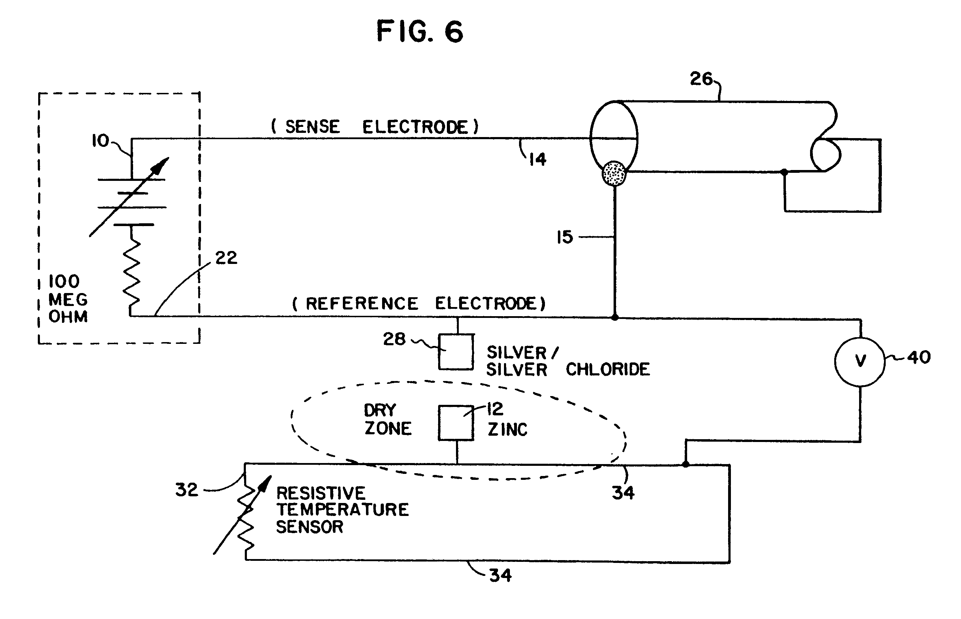

It is possible to add a component within the envelope of the glass electrode to provide for temperature sensing. This is commonly used to provide the information required by an analyser to correct the indicator and output signal for the effect of temperature on the response of the sensor and/or the pH of the solution being analysed. In some applications of this invention, it may be desired to connect either the zinc element or the silver/silver chloride element to the temperature sensor to provide a significant electrical bias between the temperature sensor and the reference electrode. The circuitry within the analyser would dictate how the electrically active elements would be connected. Figure 6 shows one connection method with the silver/silver chloride element 28 connected to the reference electrode 22 and the zinc element 12 connected to one side of the temperature sensor 32. Other placements of the elements which would be effective can be readily determined by one skilled in the application of this technology

As shown in Figure 6, when the dry zone around the zinc element 12 becomes wet, a D.C. potential difference is generated between the temperature sensor and the reference electrode which can be detected to indicate that the sensor body has been broken and that moisture has invaded the sensor.

## Claims

1. A combination of an electrochemical sensor and an apparatus for detecting a break in a normally dry, closed enclosure (24) of the electrochemical sensor by detecting the intrusion of moisture thereinto,

    the electrochemical sensor comprising a sensor sense electrode (10) and a sensor reference electrode (22), and

    the apparatus for detecting a break in the enclosure (24) comprising :

    first (12) and second (18 ;28) electrodes spaced apart from each other in the enclosure (24), the first and second electrodes being made of metallic elements having dissimilar electrical potential and reactive characteristics, one of the first and second electrodes being connected to the sensor sense electrode (10) or a lead (14) thereof, and the other of the first and second electrodes being connected to the sensor reference electrode (22) or a lead (15) thereof ; and

    voltage measuring means (40) connected to the first and second electrodes (12,18 ;28) for detecting a potential difference between the first and second electrodes which is indicative of the intrusion of moisture into the enclosure (24), thereby indicating a break in the enclosure (24).

2. A combination according to claim 1, including a dry salt in the enclosure (24) for producing an electrolyte when moisture enters the enclosure.

3. A combination according to claim 1 or claim 2, wherein the first and/or second electrodes comprise the leads (14) of the sense (10) and/or reference electrodes.

4. A combination according to claim 1 or claim 2, wherein the first electrode (12) is electrically connected to the lead (14) of the sensor sense electrode (10).

5. A combination according to claim 1, claim 2 or claim 4, including a temperature sensor (32) in the enclosure (24) and a lead (34) connected to the temperature sensor (32), the first electrode (12) being electrically connected to the lead (34).

6. A combination according to claim 5, wherein the temperature sensor (32) includes a salt impregnated layer (30) in the enclosure (24).

7. A combination according to claim 2, including a salt impregnated paper layer (30) on an interior surface of the enclosure (24) for providing the dry salt in the enclosure (24).

8. A combination according to any one of the preceding claims, wherein the voltage measuring means comprises a voltmeter (40) electrically connected between the first and second electrodes (12,18 ;28).

9. A combination according to any one of the preceding claims, wherein one of the first and second electrodes (12, 18 ; 28) comprises zinc and the other of the first and second electrodes comprises silver.

10. A combination according to claim 9, including a first lead (14) connected to the sensor sense electrode (10) and a coaxial lead (26) extending around at least a portion of the first lead (14), the first electrode (12) being made of zinc and being electrically connected to the first lead (14), and the second electrode (18 ;28) being made of silver and being electrically connected to the coaxial lead (26).

11. A combination according to any one of the preceding claims, wherein the electrochemical sensor comprises a pH sensor.

12. A method of detecting a break in a normally dry, closed enclosure (24) of an electrochemical sensor having a sensor sense electrode (10) within the enclosure, a sensor reference electrode (22) for electrochemical interaction with the sensor sense electrode (10), and lead means (14,15) connected to the sensor sense electrode (10) and to the sensor reference electrode (22), the method comprising the steps of :

    positioning spaced apart first and second elements (12,18 ;28) in the enclosure (24), the first and second elements being made of two metals having dissimilar electrical potential and reactive characteristics ;

connecting the first element (12) to a portion of the lead means (14) connected to the sensor sense electrode (10), and the second element (18 ;28) to a portion of the lead means (15) connected to the sensor reference electrode (22) ; and

measuring a potential difference between the first and second elements (12,18 ;28) which is indicative of the entry of moisture into the enclosure (24) caused by a break in the enclosure.

13. A method according to claim 12, including the step of adding a salt in the enclosure (24) for producing an electrolyte when moisture enters the enclosure to cause the production of an electrical potential difference between the first and second elements (12,18 ;28).

14. A method according to claim 12 or claim 13, including the steps of providing a temperature sensor (32) in the enclosure (24), and connecting the first element (12) to the temperature sensor (32) and the second element (18 ;28) to the lead means (14,15).

15. A method according to claim 12, claim 13 or claim 14, including the steps of forming the first element (12) of zinc and forming the second element (18 ;28) of silver.

16. Apparatus for detecting a break in a normally dry, closed enclosure (24) of an electrochemical pH sensor having a sensor sense electrode (10) and a sensor reference electrode (22) by detecting the intrusion of moisture thereinto, the apparatus comprising :

first (12) and second (18 ;28) electrodes spaced apart from each other in the enclosure (24), the first and second electrodes (12,18 ;28) being made of metallic elements having dissimilar electrical potential and reactive characteristics, one of the first and second electrodes being connected to the sensor sense electrode (10) or a lead (14) thereof, and the other of the first and second electrodes being connected to the sensor reference electrode (22) or a lead (15) thereof ; and

voltage measuring means (40) connected to the first and second electrodes (12,18 ;28) for detecting a potential difference between the first and second electrodes when moisture enters the enclosure (24), indicating a break in the enclosure (24).

17. Apparatus according to claim 16, wherein the first electrode (12) is made of zinc and the second electrode (18 ;28) is made of silver.

18. Apparatus according to claim 17, wherein the second electrode (18) made of silver is further coated with silver chloride (28) to provide a more predictable and stable potential difference.

19. Apparatus according to claim 18, including a temperature sensor (32) located in the enclosure (24) electrically connected to the first electrode (12) made of zinc, and wherein the second electrode (18) made of silver and further coated with silver chloride (28) is connected to the sensor reference electrode (22) to provide a significant electrical bias between the temperature sensor (32) and the sensor reference electrode (22).

FIG.1

FIG.2

FIG.3

# FIG. 4
## PRIOR ART

(SENSE ELECTRODE)

10

14

26

100
MEG
OHM

22

15

(REFERENCE ELECTRODE)

# FIG. 5

( SENSE ELECTRODE )

10

100 MEG OHM

22

DRY ZONE | ZINC
12

28 | SILVER / SILVER CHLORIDE

( REFERENCE ELECTRODE )

14

15

26

40
V

EP 0 441 659 A1

# FIG. 6

EP 0 441 659 A1

## EUROPEAN SEARCH REPORT

European Patent
Office

Application Number

EP 91 30 1086

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 500 284 (K. SPEIDEL)<br>* Abstract * | 1 | G 01 N 27/28 |
| A | US-A-4 822 456 (A.I. BRYAN)<br>* Front page * | 1 | |
| A | FR-A-2 226 661 (LICENCIA TALALMANYOKAT ERTEKESITO VALLALAT)<br>* Claim 1 * | 1 | |

TECHNICAL FIELDS
SEARCHED (Int. Cl.5)

G 01 N

The present search report has been drawn up for all claims

| Place of search | Date of completion of the search | Examiner |
|---|---|---|
| THE HAGUE | 06-05-1991 | DUCHATELLIER M.A. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P0401)

13